# DEMANDE DE BREVET EUROPEEN

(11) **EP 0 753 486 A1**
(43) Date de publication de la demande: **15.01.1997**
(21) Numéro de dépôt: 96401363.5
(22) Date de dépôt: 20.06.1996
(51) Int. Cl.: C02F 1/46, G21F 9/06

(54) **Procédé de traitement par électrolyse d'un effluent liquide contenant des métaux dissous et application au traitement d'effluents contenant du cérium**

(30) Priorité: 11.07.1995 FR 9508385
(71) Demandeur: FRAMATOME, 92400 Courbevoie (FR)
(72) Inventeur: Saurin, Pierre, 78570 Andresy (FR); Larue, Françoise, 78220 Viroflay (FR); Nguyen, Bernadette, 38402 Saint Martin d'Heres (FR); Breheret, Jérôme, 79000 Niort (FR)
(74) Mandataire: Moncheny, Michel

(57) **Abrégé**

Ce procédé consiste à traiter un effluent liquide, notamment d'un effluent de décontamination de composants de réacteur nucléaire, pour en séparer par électrolyse des métaux dissous, notamment Fe, Ni, Cr et Co activés. On soumet à une électrolyse une solution aqueuse acide dérivant dudit effluent liquide et contenant les métaux dissous sous forme de sulfates en milieu sulfurique, en maintenant le pH de l'électrolyte entre 1,3 et 2 et le potentiel cathodique entre -1,3 et-1,9 V par rapport à l'électrode au calomel saturé (V/ECS).

Ce procédé peut s'appliquer au traitement d'effluents contenant du cérium.

## Description

La présente invention concerne un procédé de traitement d'un effluent liquide pour en séparer des métaux dissous, par électrolyse.

Elle s'applique en particulier au traitement d'effluents liquides résultant d'opérations de décontamination ou de nettoyage de composants d'un réacteur nucléaire.

Dans le circuit primaire d'un réacteur nucléaire, notamment à eau sous pression, les composants qui sont généralement en acier se dégradent en donnant des produits de corrosion qui sont entraînés par le fluide primaire jusqu'au coeur du réacteur où ils deviennent radioactifs. Les produits de corrosion activés, ainsi que les produits de fission éventuellement entraînés en cas de fuite à travers le matériau de gainage des éléments combustibles, sont susceptibles de se déposer par la suite sur des composants du circuit primaire situés à l'extérieur du coeur, et de créer ainsi un risque d'irradiation du personnel de maintenance.

Lors du démantèlement d'un réacteur, ces dépôts activés sont éliminés des composants du circuit primaire au moyen d'une solution d'attaque susceptible de dissoudre ces dépôts. Cette opération produit des effluents radioactifs qui contiennent à l'état dissous des métaux constitutifs des composants du circuit primaire, notamment du fer, du nickel et du chrome, et également du cobalt provenant de la réaction dans le coeur du réacteur. Le cobalt radioactif, dont la période radioactive est de 5 ans, est la source majeure d'activité de ces effluents et sa durée de vie rend impossible le rejet des effluents et impose des opérations de traitement en vue d'un stockage des éléments activés.

Le nettoyage, également au moyen de solutions d'attaque, des composants du circuit secondaire, notamment des générateurs de vapeur où se produit une accumulation de boues constituées de particules et d'oxydes métalliques issus du circuit secondaire qui peuvent également être activés, est aussi une source d'effluents nocifs, quoique moins actifs.

Le traitement des effluents pour abaisser leur activité consiste en une séparation des métaux activés. La séparation par précipitation d'hydroxydes métalliques a été envisagée, mais présente l'inconvénient de produire des déchets actifs volumineux qui sont de surcroît corrosifs et nuisibles à l'étanchéité des enceintes de stockage.

La séparation des éléments activés sous forme de métaux élémentaires moins volumineux est possible par électrolyse de l'effluent. Il s'agit de réduire les cations métalliques et de les déposer sur une électrode qui sera ensuite stockée dans des moyens adaptés. Cependant, les effluents de décontamination ou de nettoyage contiennent de nombreux métaux en solution, principalement le fer, le nickel, le chrome et le cobalt, et le dépôt simultané de plusieurs métaux par voie électrolytique est très délicat à réaliser et à maîtriser. De fait, les métaux peuvent agir en compétition les uns avec les autres et certains peuvent être amenés à ne pas se déposer et à rester en solution.

En outre, il est impératif que le dépôt qui se forme sur l'électrode soit suffisamment adhérent et homogène, pour éviter que des fragments de dépôt ne se détachent de l'électrode-support. La récupération de ces fragments entraîne une succession d'opérations supplémentaires qui représentent un danger de contamination indésirable.

Un autre phénomène à éviter est la formation d'un dépôt contenant des hydroxydes, qui n'est pas homogène, est peu adhérent et surtout peu conducteur, ce qui limite les possibilités d'un dépôt important du fait que la cathode devient progressivement isolante ou peu conductrice.

Par ailleurs, les conditions de l'électrolyse ne doivent pas favoriser la formation dans l'électrolyte de précipités qui sont susceptibles de piéger des espèces radioactives qui ne sont alors plus récupérables par voie électrolytique.

Les conditions opératoires proposées jusqu'à présent ne permettent pas d'éviter tous ces risques et d'atteindre une qualité de dépôt suffisante pour que le procédé puisse être appliqué sans danger à une échelle industrielle.

La présente invention a pour but de fournir une solution efficace au problème de la séparation par électrolyse de métaux dissous dans des effluents liquides permettant d'obtenir un dépôt métallique homogène et adhérent, notamment sur une cathode de grande surface, avec, dans le cas du traitement d'un effluent radioactif, une bonne déposition des éléments activés, afin de permettre un confinement de la radioactivité dans une zone de stockage de longue durée.

A cet effet, l'invention a pour objet un procédé de traitement d'un effluent liquide, notamment d'un effluent de décontamination de composants d'un réacteur nucléaire, pour en séparer par électrolyse des métaux dissous, notamment du fer, du chrome, du nickel et du cobalt activés, caractérisé en ce que l'on soumet à une électrolyse une solution aqueuse acide dérivant dudit effluent liquide et contenant les métaux dissous sous forme de sulfates en milieu sulfurique, en maintenant le pH de l'électrolyte entre 1,3 et 2 et le potentiel cathodique entre -1,3 et-1,9 V par rapport à l'électrode au calomel saturé (V/ECS).

Dans la suite de cette description, le terme "électrolyte" désigne la solution aqueuse acide subissant l'électrolyse.

Au cours de l'électrolyse, on provoque la réduction simultanée des différentes espèces métalliques en solution. Suivant la composition de la solution aqueuse acide, d'autres réactions ont également lieu, qui peuvent produire des effets parasites. Ainsi, on peut observer l'électrolyse de l'eau de la solution qui, en compétition avec la réduction des métaux, abaisse le rendement faradique et qui est la source d'un dégagement d'hydrogène, impliquant les précautions opératoires d'usage. La réduction à la cathode des protons du solvant a également pour effet de faire augmenter le pH de l'électrolyte au niveau de la cathode (pH interfacial), entraînant un risque de précipitation, notamment d'hydroxydes, au détriment de la réduction des cations.

Les conditions opératoires de l'invention permettent de réaliser préférentiellement les réactions de réduction des cations des métaux à déposer, notamment en limitant l'électrolyse de l'eau.

Ainsi, le pH de l'électrolyte est maintenu entre 1,3 et 2 au cours de l'électrodéposition, et de préférence entre 1,5 et 1,7, avantageusement à une valeur d'environ 1,5.

Si le pH est trop élevé, le risque de précipitation d'hydroxydes apparaît. S'il est trop faible, le dépôt n'a pas lieu ou très peu.

Le maintien du pH dans la gamme désirée se fait de façon connue en ajoutant une quantité adéquate d'acide ou de base, selon les cas.

Au cours du procédé de l'invention, le pH de l'électrolyte a plutôt tendance à baisser et il peut être réajusté, soit périodiquement, soit en continu, par addition d'une base, de préférence de la soude.

Par ailleurs, pour obtenir un dépôt satisfaisant, le potentiel appliqué à la cathode, mesuré par rapport à une électrode de référence au calomel saturé en KCl plongée dans une allonge contenant des ions sulfate, est maintenu entre -1,9 et-1,3 V.

Si le potentiel cathodique est supérieur à -1,3 V, le dépôt se fait mal. Lorsque le potentiel est inférieur à -1,9 V, le dépôt n'est pas homogène et a une forte tendance à se craqueler, et le procédé n'est pas exploitable.

De préférence, le potentiel cathodique est maintenu entre - 1,5 et - 1,7 V/ECS. Très avantageusement, le potentiel cathodique est maintenu à une valeur d'environ - 1,5 V/ECS.

La cathode utilisée est de préférence en un matériau métallique compatible avec le dépôt des métaux précités. Le matériau constitutif de la cathode peut être avantageusement du fer, du nickel, du chrome ou du cuivre, qui font preuve d'une très bonne compatibilité. La cathode peut être constituée essentiellement de l'un de ces éléments ou bien d'une combinaison de plusieurs de ces éléments, notamment d'un alliage d'acier inoxydable.

On utilisera également avantageusement une électrode constituée essentiellement de carbone.

Le choix de l'anode est moins critique. On utilise de préférence une anode insoluble, par exemple en titane platiné.

Avantageusement, on peut introduire dans l'électrolyte soit périodiquement, soit en continu au cours de l'électrolyse, un alcool, notamment de l'éthanol, de manière que la concentration en alcool dans l'électrolyte soit comprise entre 10⁻⁴ mol/l et 10⁻² mol/l, de préférence soit d'environ 10⁻³ mol/l.

De préférence, l'électrolyte est maintenu sous brassage pendant toute la durée de l'opération d'électrolyse pour assurer une bonne distribution des espèces en solution, notamment d'un acide, d'une base ou d'un alcool ajouté en cours d'électrolyse.

L'électrolyse a lieu avantageusement à une température de 20 à 60°C, de préférence de 25 à 35°C. La température peut toutefois s'élever momentanément en dehors de cette gamme, en fonction de la densité de courant traversant le milieu.

Des additifs classiques peuvent être ajoutés à la solution aqueuse acide pour faciliter le dépôt, tels que :
- des sels de fond pour augmenter la conductivité de l'électrolyte ;
- des agents complexants (notamment de l'EDTA, un citrate...) afin de limiter les risques de précipitations dues à l'augmentation du pH interfacial lors de la réduction du solvant, de favoriser le codépôt des différents métaux en diminuant l'écart entre les tensions thermodermiques des couples cation métallique/métal libre, et/ou stabiliser les ions ferriques en solution;
- des tampons de pH (H₃BO₃, glycine, AlCl₃...) pour limiter la précipitation d'hydroxydes ;
- des agents d'amélioration de l'état de surface des dépôts électrolytiques (notamment des niveleurs).

Selon la composition de l'effluent à traiter, il peut être avantageux de contrôler la migration des espèces ioniques dans l'électrolyte par l'intermédiaire d'une membrane de filtration séparant la cellule d'électrolyse en un compartiment anodique et un compartiment cathodique.

L'opération d'électrolyse d'une solution aqueuse radioactive peut être communément conduite jusqu'à ce qu'une quantité suffisamment élevée d'activité ait été transférée de la solution aqueuse à la cathode pour que l'activité de l'électrolyte épuré soit abaissée à un niveau tolérable.

Ainsi, on peut procéder à l'électrolyse en mesurant l'activité du rayonnement gamma de l'électrolyte. Dès que cette activité est inférieure à un seuil prédéterminé, on évacue l'électrolyte de la cellule d'électrolyse.

La même cellule d'électrolyse peut être utilisée pour traiter de façon discontinue des volumes importants de solution.

La cathode recouverte du dépôt métallique radioactif peut être remplacée par une cathode neuve dès que l'activité de son rayonnement gamma dépasse une valeur prédéterminée correspondant à l'activité maximale d'un déchet stockable.

De façon générale, l'anode peut être également remplacée dès que son état devient néfaste au rendement faradique de l'électrolyse.

En variante, on peut procéder à l'électrolyse dans une enceinte isolante prévue pour la séparation par électrolyse et le confinement de produits radioactifs contenus dans une solution liquide. Ce type d'enceinte comprend une capacité comportant des parois en matériau absorbant les radiations susceptibles d'être émises par les produits radioactifs, à l'intérieur de laquelle sont fixées une anode et une cathode.

Pour réaliser l'épuration de solutions liquides radioactives dans ce type d'enceintes, on introduit un volume prédéterminé de solution dans la capacité et on réalise l'électrolyse de la solution dans la capacité pour séparer les produits radioactifs de la solution. Dès que l'activité du rayonnement gamma de la solution est inférieure à un seuil prédéterminé, on vide les solutions de la capacité. Tant que le débit de dose de rayonnement émis par le contenu de la capacité à l'extérieur de celle-ci est inférieur à un seuil prédéterminé, on effectue à nouveau les étapes précédentes avec des volumes successifs de solutions. Dès que le débit de dose de rayonnement émis par le contenu de la capacité de confinement à l'extérieur de celle-ci devient supérieur à la valeur prédéterminée, on évacue la capacité vidangée vers un stockage de produits contaminés en laissant les électrodes sur lesquelles se sont déposés les produits radioactifs à l'intérieur de la capacité.

En variante, on peut couler du béton dans la capacité préalablement à son stockage.

Il se peut que l'effluent liquide à traiter pour en séparer des métaux dissous ne se trouve pas directement sous une forme apte à subir le traitement par électrolyse de l'invention. Sa composition peut alors être ajustée, notamment pour porter son pH à une valeur comprise entre 1,3 et 2, pour constituer la solution aqueuse acide qui va subir l'électrolyse.

Le passage de l'effluent liquide contenant les métaux dissous à la solution aqueuse acide d'électrolyse contenant lesdits métaux sous forme de sulfates, en milieu sulfurique peut nécessiter une ou plusieurs étapes que l'homme du métier est à même de déterminer au cas par cas en fonction de la composition de l'effluent liquide à traiter.

En particulier, si l'effluent liquide à traiter contient des anions autres que les ions sulfate et hydroxyle, notamment des ions nitrate, on peut soumettre l'effluent à tout procédé connu de séparation par voie non-électrolytique des métaux dissous, notamment par précipitation d'hydroxydes métalliques, puis remettre lesdits métaux en solution en milieu sulfurique.

Cela peut être le cas lorsque l'effluent à traiter provient d'une opération de décontamination ou de nettoyage en milieu acide nitrique ou sulfo-nitrique.

Le procédé de traitement de l'invention peut s'appliquer avantageusement au traitement d'effluents de décontamination ou de nettoyage de composants d'un réacteur nucléaire en extrayant de la solution au moins 80 % de l'activité, avantageusement plus de 90 % de l'activité.

On a pu constater que le procédé peut s'appliquer à une grande variété d'effluents de décontamination. En particulier, les conditions du procédé de l'invention sont parfaitement adaptées au traitement d'effluents de décontamination contenant du cérium dissous à l'état d'ions Ce³⁺, issus de la décontamination au moyen de solutions d'attaque contenant un sel de cérium. En effet, ces effluents posent des problèmes particuliers lorsqu'ils sont traités par électrolyse car les ions Ce³⁺ sont susceptibles d'être oxydés à l'anode en ions Ce⁴⁺. La présence d'ions Ce⁴⁺ dans l'électrolyte est gênante en raison du fait que leur réduction à la cathode peut entrer en compétition avec la réduction des cations des métaux que l'on souhaite déposer sur la cathode.

Les conditions d'électrolyse du procédé de l'invention conduisent au contraire avec ces effluents à des dépôts métalliques relativement importants et de bonne qualité. Ces bons résultats seraient dûs au fait que les conditions de pH et de potentiel cathodique définies précédemment ne sont pas favorables à l'oxydation du cérium(+III) en cérium(+IV).

L'invention a donc également pour objet l'utilisation d'un procédé de traitement d'effluent liquide tel que défini précédemment, pour éliminer les métaux, notamment les métaux activés, présents dans un effluent liquide de décontamination contenant du cérium dissous.

En particulier, le procédé peut être utilisé avantageusement pour traiter un effluent liquide résultant de la décontamination de composants d'un réacteur nucléaire par une solution d'attaque comprenant du nitrate de cérium à raison de 0,01 à 50 g/l et de l'acide nitrique, le pH de la solution d'attaque étant inférieur à 7, de préférence compris entre 0,4 et 1,8.

Le procédé de traitement de l'invention peut également s'appliquer pour des effluents résultant de la décontamination par une solution d'attaque du type précédent et contenant en outre de 0,01 à 50 g/l d'acide chromique et de 0,001 à 1 g/l d'ozone.

L'invention va maintenant être illustrée par l'exemple de mise en oeuvre pratique suivant.

La décontamination du circuit primaire en acier inoxydable d'un réacteur nucléaire au moyen d'une solution d'attaque à base aqueuse comprenant du nitrate de cérium Ce(NO₃)₄, 6 H₂O à raison de 8 g/l et de l'acide nitrique pour amener à 0,6 le pH de la solution d'attaque, produit un effluent aqueux présentant les teneurs en cations métalliques suivantes :

| | |
|---|---|
| Fe³⁺ | 0,038 mol/l |
| Ni²⁺ | 0,27 mol/l |
| Cr³⁺ | 0,061 mol/l |
| Ce³⁺ | 0,018 mol/l |
| Co²⁺ | 0,003 mol/l (100 ppm) |

Une solution aqueuse sulfurique de même composition cationique et ayant un pH de 1,5 est soumise à un traitement par électrolyse selon l'invention.

100 ml de solution sont introduits dans un bêcher de 150 ml où plongent une cathode en cuivre de 6 cm² de surface active, une anode en titane platiné sous forme de grille de (5 x 5) cm², disposée à 3 cm de la cathode, et une électrode de référence au Hg/Hg₂Cl₂/KCl saturé dans une allonge contenant de l'acide sulfurique à pH=1,5 plongeant entre l'anode et la cathode, hors des lignes de courant.

L'électrolyte et placé sous agitation magnétique à 300 tr/min. La température initiale de la solution est de 30°C.

L'électrolyse est pratiquée avec un potentiel cathodique de -1,5 V/ECS, en réajustant le pH à 1,5 par ajout de soude. L'emploi de potasse à la place de la soude est à éviter car elle peut entraîner la formation d'un précipité. Parallèlement, on maintient constant le volume total de la solution par ajout d'eau (le passage du courant dans l'électrolyte provoque un échauffement qui est responsable d'une évaporation partielle du solvant).

Au bout de 50 heures, on observe que le dépôt formé sur la cathode est homogène, bien adhérent, présentant un bel aspect métallique. Son épaisseur est homogène sur l'ensemble de la surface de l'électrode et est de l'ordre de 40 microns. Le dépôt est composé essentiellement de nickel. On trouve également du fer en quantité plus importante près de l'interface. On détecte aussi du chrome réparti dans tout le dépôt, qui a pour effet de limiter la corrosion de l'échantillon. Le cobalt est également déposé, associé au nickel, essentiellement près de l'interface. Le dépôt contient également du cérium et du soufre répartis de façon homogène.

Le dosage du nickel et du cobalt dans l'électrolyte après l'électrolyse montre que la concentration finale en nickel chute à 20 % de la concentration initiale et la concentration finale en cobalt ne représente plus que 15 % de la concentration initiale. On sépare ainsi environ 85 % du cobalt de l'électrolyte et on peut donc abaisser d'environ 85 % l'activité de l'électrolyte due au cobalt.

Le rendement d'épuration peut aisément être amélioré en prolongeant la durée de l'électrolyse, ou en augmentant la surface de la cathode par rapport au volume de l'électrolyte.

Le traitement peut être répété avec des volumes successifs de solution jusqu'à ce qu'un maximum de composés radioactifs soit déposé sur la cathode. Cette dernière est alors stockée dans un conteneur approprié.

L'invention ne se limite pas au mode de réalisation décrit dans cet exemple. En particulier, il est possible de traiter un autre type d'effluent, ne contenant par exemple pas de cérium. Il est également possible d'ajouter des additifs à l'électrolyte soit avant, soit au cours de l'électrolyse, pour en améliorer le rendement.

En outre, le procédé peut être mis en oeuvre pour traiter des volumes stockés importants d'effluents en discontinu par traitements successifs de volumes déterminés introduits dans une cellule d'électrolyse.

On peut également procéder en continu dans une installation du type comprenant une cellule d'électrolyse et un réservoir d'électrolyte obtenu à partir d'un effluent de décontamination et contenant les éléments à éliminer, qui alimente en continu la cellule d'électrolyse. De l'électrolyte en cours de traitement dans la cellule, appauvri en polluants, est soutiré en continu et recyclé dans le réservoir d'électrolyte où il se mélange à de l'électrolyte relativement plus riche en polluants. Lorsque la concentration en polluants dans le réservoir d'électrolyte, qui décroît du fait du recyclage de l'électrolyte traité, atteint la valeur limite correspondant à l'épuration désirée, le contenu du réservoir peut être rejeté hors de l'installation d'épuration.

## Revendications

1. Procédé de traitement d'un effluent liquide, notamment d'un effluent de décontamination de composants d'un réacteur nucléaire, pour en séparer par électrolyse des métaux dissous, notamment du fer, du chrome, du nickel et du cobalt activés, caractérisé en ce que l'on soumet à une électrolyse une solution aqueuse acide dérivant dudit effluent liquide et contenant les métaux dissous sous forme de sulfates en milieu sulfurique, en maintenant le pH de l'électrolyte entre 1,3 et 2 et le potentiel cathodique entre -1,3 et-1,9 V par rapport à l'électrode au calomel saturé (V/ECS).

2. Procédé selon la revendication 1, caractérisé en ce que le pH de l'électrolyte est maintenu entre 1,5 et 1,7.

3. Procédé selon la revendication 1 ou 2, caractérisé en ce que le pH de l'électrolyte est ajusté par addition de soude.

4. Procédé selon l'une quelconque des revendications 1 à 3, caractérisé en ce que le potentiel cathodique est maintenu entre -1,5 et -1,7 V/ECS.

5. Procédé selon l'une quelconque des revendications 1 à 4, caractérisé en ce que la cathode est constituée essentiellement de l'un au moins des éléments fer, nickel,chrome ou cuivre.

6. Procédé selon l'une quelconque des revendications 1 à 4, caractérisé en ce que la cathode est constituée essentiellement de carbone.

7. Procédé selon l'une quelconque des revendications 1 à 6, caractérisé en ce que l'on introduit dans l'électrolyte un alcool, notamment de l'éthanol, de manière que la concentration en alcool de l'électrolyte soit comprise entre 10⁻⁴ et 10⁻² mol.l⁻¹.

8. Procédé selon l'une quelconque des revendications 1 à 7, caractérisé en ce que la migration des ions dans l'électrolyte est contrôlée par l'intermédiaire d'une membrane de filtration séparant la cellule d'électrolyse en un compartiment anodique et un compartiment cathodique.

9. Procédé selon l'une quelconque des revendications 1 à 8, l'effluent liquide contenant des anions autres que les ions sulfate et hydroxyle, caractérisé en ce que l'on soumet ledit effluent à une séparation non électrolytique de métaux dissous, et en ce que l'on remet lesdits métaux en solution en milieu sulfurique, pour fournir la solution aqueuse acide contenant les métaux dissous sous forme de sulfates en milieu sulfurique.

10. Procédé selon la revendication 9, caractérisé en ce que l'effluent liquide contient des métaux dissous sous forme de nitrates en milieu nitrique.

11. Utilisation d'un procédé selon l'une quelconque des revendications 1 à 10 pour éliminer des métaux, notamment des métaux activés, présents dans un effluent liquide de décontamination contenant du cérium dissous.

12. Utilisation selon la revendication 11, pour traiter un effluent liquide résultant de la décontamination de composants d'un réacteur nucléaire par une solution d'attaque comprenant du nitrate de cérium à raison de 0,01 à 50 g/l et de l'acide nitrique, le pH de la solution d'attaque étant inférieur à 7, de préférence de 0,4 à 1,8.

13. Utilisation selon la revendication 12, dans laquelle la solution d'attaque comprend en outre de 0,01 à 50 g/l d'acide chromique et de 0,001 à 1 g/l d'ozone.
